## Europäisches Patentamt

## European Patent Office

## Office européen des brevets

(19)

(11) Veröffentlichungsnummer: **0 121 686**
**A2**

(12) **EUROPÄISCHE PATENTANMELDUNG**

(21) Anmeldenummer: **84101500.1**

(22) Anmeldetag: **14.02.84**

(51) Int. Cl.³: **G 06 K 9/60**

(30) Priorität: **11.03.83 US 474408**

(43) Veröffentlichungstag der Anmeldung: **17.10.84**
**Patentblatt 84/42**

(84) Benannte Vertragsstaaten: **AT BE CH DE FR GB IT LI LU NL SE**

(71) Anmelder: **Siemens Aktiengesellschaft, Berlin und München Wittelsbacherplatz 2, D-8000 München 2 (DE)**

(72) Erfinder: **Tsikos, Constantine J., 5316 King Avenue, Pennsauken New Jersey 08109 (US)**

(54) Einrichtung zur Ermittlung des zweidimensionalen Zusammenhangs einer vorgeschriebenen und einer Fläche zugeordneten binären Variablen.

(57) Die Einrichtung ermöglicht die Ermittlung des zweidimensionalen Zusammenhangs-Profils einer vorgeschriebenen binären Variablen, welche einer Fläche zugeordnet ist. Für diese Ermittlung werden keine oder allenfalls geringe Rechnerzeiten benötigt. Die Einrichtung umfaßt eine durch Schalter-Zellen gebildeten Zusammenhangs-Matrix und eine durch Sensor-Zellen gebildete zweidimensionale Sensor-Anordnung. Die Sensor-Zellen erfassen die Anwesenheit oder Abwesenheit der binären Variablen und steuern die ihnen zugeordneten Schalter-Zellen der Zusammenhangs-Matrix. Diese Einrichtung kann beispielsweise für die Prüfung von Schaltungsplatten und für die Analyse von Fingerabdrücken eingesetzt werden, wobei es sich dann bei der binären Variablen um die Anwesenheit oder Abwesenheit einer Leiterbahn auf der Oberfläche der Schaltungsplatte oder um die Anwesenheit oder Abwesenheit einer Papillarlinie (20) auf der Oberfläche eines Fingers handelt.

Siemens Aktiengesellschaft             Unser Zeichen

Berlin und München                     VPA 83 P 7408 E

**Einrichtung zur Ermittlung des zweidimensionalen Zusammenhangs einer vorgeschriebenen und einer Fläche zugeordneten binären Variablen**

Die Erfindung betrifft eine Einrichtung zur Ermittlung des Zusammenhangs einer vorgeschriebenen binären Variablen zwischen voneinander entfernten Punkten auf einer der binären Variablen zugeordneten Fläche.

Bei derartigen binären Variablen kann es sich beispielsweise um die Anwesenheit oder Abwesenheit einer Papillarlinie auf der Oberfläche eines menschlichen Fingers oder um die Anwesenheit oder Abwesenheit einer auf ein Blatt Papier aufgebrachten Linie oder um die Anwesenheit oder Abwesenheit einer Leiterbahn auf der Oberfläche einer gedruckten Schaltung handeln. Sowohl bei diesen Beispielen als auch in anderen Fällen ist es häufig erwünscht, den Zusammenhang bzw. die Verbindung der binären Variablen zwischen voneinander entfernten Punkten auf der zugeordneten Fläche oder Oberfläche zu bestimmen. Dies bedeutet, daß es wichtig ist zu wissen, ob die an zwei getrennten Punkten auf der Fläche oder Oberfläche vorhandene binäre Variable auch an einer Reihe von zwischen den getrennten Punkten aneinander angrenzenden Punkten vorhanden ist, d.h. ob diese getrennten Punkte sozusagen miteinander verbunden sind.

Es ist möglich und tatsächlich auch bekannt, einen Digitalrechner mit Informationen über die Anwesenheit oder Abwesenheit einer binären Variablen an sämtlichen Knotenpunkten eines zweidimensionalen Gitternetzes zu versorgen. Wenn diese Informationen dann im Speicher aufbewahrt sind, so

Klk 1 Kow / 7.2.1984

kann der Rechner den Zusammenhang innerhalb des zweidimensionalen Binärmusters durch einen geeigneten, als Software ausgeführten Algorithmus bestimmen. Eine Art dieses Algorithmus folgt der sog. "Buschfeuer-Logik", nach welcher zunächst mit einem Knotenpunkt begonnen wird, an welchem die binäre Variable auf einem logisch 1-Zustand ist. Danach wird die binäre Variable an ihren benachbarten Knotenpunkten überprüft, um diejenigen zu bestimmen, die ebenfalls auf einem logisch 1-Zustand sind und demzufolge als mit dem anfänglichen Knotenpunkt verbunden angesehen werden. Anschließend wird der Vorgang mit den derart bestimmten benachbarten Knotenpunkten als Startpunkt wiederholt. Durch dieses Vorgehen kann einer Reihe miteinander verbundener Knotenpunkte fortlaufend gefolgt werden, so wie ein Buschfeuer sich dadurch fortlaufend über den Boden bewegt, daß es nacheinander benachbarte brennbare Teile des Unterholzes entzündet.

Der auf die Buschfeuer-Logik abgestellte Algorithmus ist äußerst unwirtschaftlich und zeitaufwendig und daher im Hinblick auf die erforderliche Rechnerzeit sehr kostspielig. Häufig lohnt das Endergebnis, insbesondere ein Zusammenhangsprofil der binären Variablen den Aufwand an Zeit und Kosten nicht.

Der Erfindung liegt die Aufgabe zugrunde, eine Einrichtung zur Ermittlung des zweidimensionalen Zusammenhangsprofils einer vorgeschriebenen und einer Fläche zugeordneten binären Variablen zu schaffen, die gerätemäßig als Hardwarelösung ausgeführt werden kann und damit keine oder nur geringe Rechnerzeiten erfordert.

Diese Aufgabe wird bei einer gattungsgemäßen Einrichtung durch die kennzeichnenden Merkmale des Anspruchs 1 gelöst.

-3-

Die erfindungsgemäße Einrichtung umfaßt also kurz ausgedrückt folgende wesentliche Bestandteile:

a) eine zweidimensionale Anordnung von Knotenpunkten eines
   Netzwerks;

b) eine Anzahl von Ein-/Aus-Schaltern, von welchen jeder
   zwischen zwei benachbarte Knotenpunkte eingeschaltet ist;

c) eine zweidimensionale Anordnung von Sensoren, wobei jeder
   Sensor fähig ist, den binären Zustand der Variablen an
   einem zugeordneten Punkt der in Frage stehenden Fläche zu
   erfassen; und

d) auf die individuellen Sensoren ansprechende Steuerglieder,
   welche die Schalter in Abhängigkeit von den individuellen
   und von den zugeordneten Sensoren erfaßten Zustände der
   Variablen steuern.

In der erfindungsgemäßen Einrichtung ist jeder Sensor einem
entsprechenden Knotenpunkt der Anordnung von Knotenpunkten
zugeordnet, wobei zwei benachbarte Knotenpunkte durch die
Schalter immer dann miteinander verbunden sind, wenn ein
vorgegebener Zustand, wie z.B. ein logisch 1-Zustand der
Variablen durch diejenigen Sensoren erfaßt wird, die den
beiden benachbarten Knotenpunkten zugeordnet sind.

Vorzugsweise ist jedem Knotenpunkt eine Vielzahl von
Schaltern zugeorndet, welche den jeweiligen Knotenpunkt mit
jedem seiner benachbarten Knotenpunkte verbinden. Alle diese
Schalter, die mit einem gegebenen Knotenpunkt in Verbindung
stehen, werden zusammen derart gesteuert, daß sie jeweils
zusammen die Einschaltstellung bzw. die Ausschaltstellung
einnehmen, in Abhängigkeit vom binären Zustand, wie einem
logisch 1-Zustand oder logisch 0-Zustand der Variablen, wobei
dieser binäre Zustand durch denjenigen Sensor erfaßt wird,
der dem gegebenen Knotenpunkt zugeordnet ist.

Weitere vorteilhafte Ausgestaltungen der Erfindung gehen aus

-4-

den Unteransprüchen hervor.

Durch die hardwaremäßige Lösung des Problems erfordert die erfindungsgemäße Einrichtung keine oder nur geringe Rechnerzeiten. Außerdem arbeitet die erfindungsgemäße Einrichtung parallel und damit schneller als der der Buschfeuer-Logik folgende Algorithmus.

Ausführungsbeispiele der Erfindung sind in der Zeichnung dargestellt und werden im folgenden näher beschrieben. Es zeigen:

Figur 1 die schematische Darstellung einer rechtwinkligen Anordnung von miteinander verbundenen Schalter-Zellen, wobei jede Schalter-Zelle einen von Ein-/Aus-Schaltern umgebenen Netz-Knotenpunkt umfaßt,

Figur 2 den Aufbau einer Schalter-Zelle in schematischer Darstellung,

Figur 3 den Schaltkreis der Schalter-Zelle nach Figur 2 in schematischer Darstellung,

Figur 4 eine dreieckige Schalter-Zellen-Anordnung in schematischer Darstellung,

Figur 5 eine sechseckige Schalter-Zellen-Anordnung in schematischer Darstellung,

Figur 6 die schematische Darstellung einer rechtwinkligen Schalter-Zellen-Anordnung, welche einer ein Binärmuster aufweisenden Oberfläche überlagert ist,

Figur 7 die Zuordnung einer zweidimensionalen Sensor-Anordnung und einer zweidimensionalen Schalter-Zellen-Anordnung in
schematischer Darstellung,

Figuren 8A bis 8I repräsentative Darstellungen der aufeinanderfolgenden Schritte bei der auf eine gedruckte Schaltung
angewandten erfindungsgemäßen Zusammenhangs-Ermittlung,

Figuren 9A und 9B ein Flußdiagramm einer bevorzugten Ausführungsform der erfindungsgemäßen Zusammenhangs-Ermittlung,

Figur 10 ein Zusammenhangs-Schaubild, welches die nach dem
Flußdiagramm der Figuren 9A und 9B ermittelten Zusammenhänge
verdeutlicht,

Figur 11 ein Blockschaltbild einer für die Analyse von
Fingerabdrücken geeigneten rechtwinkligen Schalter-Zellen-
Anordnung und die

Figuren 12A bis 12F die Arbeitsweise der in Figur 11 dargestellten Schalter-Zellen-Anordnung bei der Analyse von
Fingerabdrücken.

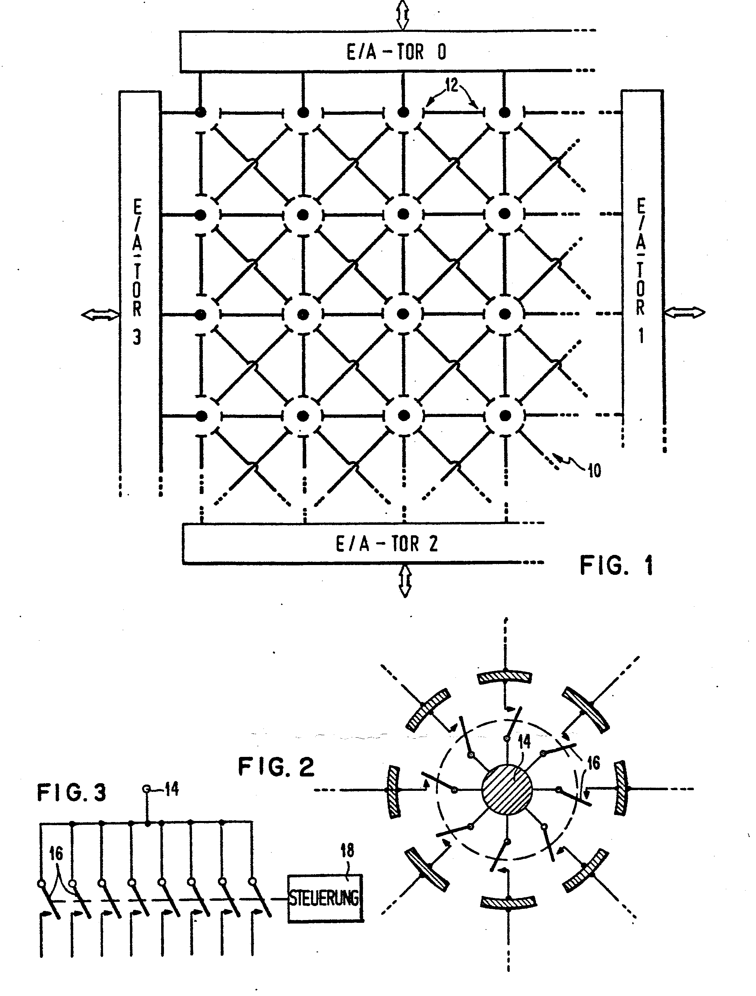

Figur 1 zeigt eine Anordnung 10 von Schalter-Zellen 12,
welche in einem rechtwinkligen Gitternetz bzw. einer rechtwinkligen Matrix angeordnet sind. Jede Schalter-Zelle 12 ist
mit allen ihren Nachbarn verbunden und im Falle der am äußeren Umfang angeordneten Schalter-Zellen 12 in der dargestellten Weise an Ein-/Ausgabe-Tore 0 bzw. 1 bzw. 2 bzw. 3
angeschlossen. Die tatsächliche Struktur und Arbeitsweise
der in Figur 1 nur schematisch dargestellten Schalter-Zellen
12 geht aus den Figuren 2 und 3 hervor. Gemäß Figur 2 umfaßt
eine Schalter-Zelle einen schwimmenden Knotenpunkt 14, welcher an eine Anzahl ihn umgebender Ein-/Aus-Schalter 16 angeschlossen ist. Gemäß Figur 3 sind diese Schalter 16 auf diese Weise parallel zueinander geschaltet, wobei die gleichzeitige Steuerung durch eine einzige Steuereinrichtung 18
erfolgt. Dabei sind alle Schalter 16 in der Ausschaltposition,
wenn die Steuereinrichtung 18 in dem logisch 1-Zustand ist.
Ist die Steuereinrichtung 18 demgegenüber in dem logisch
0-Zustand, so sind alle Schalter 16 in der Einschaltposition.
Die Steuereinrichtung 18 kann ein Solenoid enthalten, welches
die Schaltkontakte in der dargestellten Weise mechanisch betätigt. Die Steuereinrichtung 18 kann aber auch einen Treibermodul enthalten, dessen Spannung elektronischen Schaltern,
wie z.B. Transistoren, zugeführt wird.

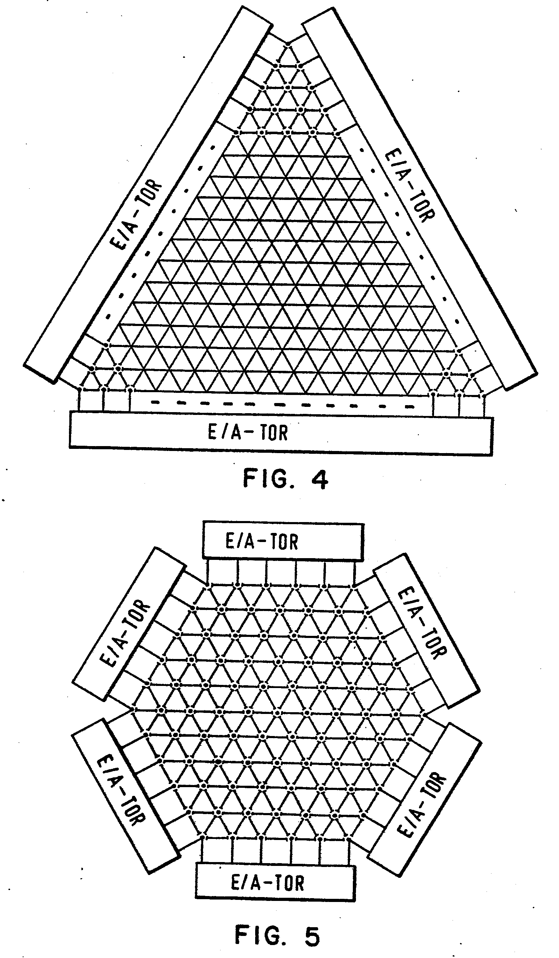

In der in Figur 1 dargestellten Schalter-Zellen-Anordnung
sind die Schalter-Zellen 12 mit jedem ihrer acht Nachbarn
verbunden, wobei lediglich die am äußeren Umfang angeordneten
Schalter-Zellen 12 eine Ausnahme bilden, da sie keine acht
Nachbarn besitzen. Die Figuren 4 und 5 zeigen dreieckige
bzw. sechseckige Schalter-Zellen-Anordnungen, bei welchen
jede Schalter-Zelle mit nur sechs benachbarten Schalter-
Zellen verbunden ist. Bei diesen beiden Ausführungsformen
ist jede Schalter-Zelle von ihren sechs Nachbarn gleich weit
entfernt.

Bei der in Figur 1 dargestellten Ausführungsform sind vier
Gruppen von Ein-/Ausgabe-Toren vorgesehen und an die betreffenden vier Seiten der rechtwinkligen Anordnung angeschlossen. Bei der Ausführungsform gemäß den Figuren 4 und 5
sind drei bzw. sechs Gruppen von Ein-/Ausgabe-Toren vorgesehen.

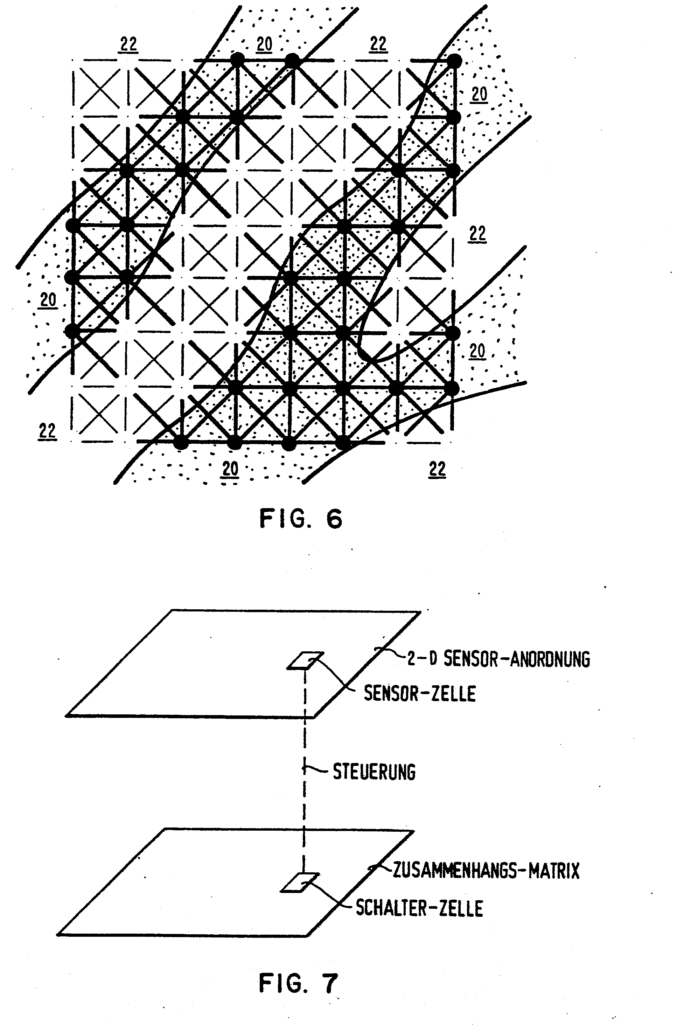

Figur 6 zeigt eine 8x8-Anordnung von Schalter-Zellen, welche
einem schmalen Ausschnitt des Musters eines Fingerabdrucks
überlagert ist. Dabei sind sowohl die Anordnung als auch das
Muster in stark vergrößertem Maßstab dargestellt. Es ist jedoch darauf hinzuweisen, daß die Anordnung in jeder Größe
ausgeführt werden kann, die für eine geeignete Anpassung an
die Geometrie einer zu analysierenden binären Variablen erforderlich ist.

Bei dem in Figur 6 dargestellten Fall ist die binäre Variable
die Anwesenheit oder Abwesenheit von Papillarlinien auf der
Oberfläche eines Fingers. Die Papillarlinien sind dabei
durch die geschwärzten Bereiche 20 aufgezeigt, während die
nicht geschwärzten Bereiche 22 die vertieften Rillen des
Fingerabdrucks darstellen. Figur 6 verdeutlicht, daß jede
Schalter-Zelle durch den binären Zustand der Variablen auf
der unmittelbar darunter angeordneten Oberfläche gesteuert
wird. Bei der in Figur 6 verwendeten symbolischen Darstellung sind alle Schalter 16 (vgl. Figur 2) einer Schalter-
Zelle in Einschaltstellung, wenn der Knotenpunkt als schwarzer Punkt dargestellt ist. Die sich in Ausschaltstellung befindlichen Schalter sind durch die Abwesenheit des schwarzen
Verbindungs-Punktes gekennzeichnet. Die dick ausgezogenen
Linien verdeutlichen Verbindungen (Leiterpfade), die zu mindestens einer Schalter-Zelle mit sich in Einschaltstellung
befindlichen Schaltern führen. Demgegenüber sind durch die
dünn ausgezogenen Linien Verbindungen (Leiterpfade) dargestellt, die nicht zu Schalter-Zellen mit sich in Einschaltstellung befindlichen Schaltern führen.

Figur 7 zeigt eine zweidimensionale Anordnung von Knotenpunkten und Schaltern bzw. Schalter-Zellen, die im folgenden
als Zusammenhangs-Matrix bezeichnet werden soll und mit
einer zweidimensionalen Sensor-Anordnung in Verbindung
steht. Jede Sensor-Zelle der Sensor-Anordnung erfaßt den
binären Zustand einer Variablen, wie z.B. einer Papillarlinie an einem zugeordneten Punkt einer Fläche, wie z.B. der
Oberfläche eines Fingers.

Zum leichteren Verständnis ist in Figur 7 eine eins zu eins
Zuordnung von Größe und Gestalt der Sensor-Anordnung und der
Zusammenhangs-Matrix dargestellt, wobei diese eins zu eins
Zuordnung jedoch nicht erforderlich ist. Es ist nur notwendig, daß die Sensor-Zellen eine den tatsächlichen Gegebenheiten der zu erfassenden binären Variablen angepaßte Größe
aufweisen. Die Zusammenhangs-Matrix kann größer oder kleiner
sein, obwohl es wünschenswert ist, daß jede Sensor-Zelle so
angeschlossen wird, daß sie die Schalter einer einzigen
Schalter-Zelle steuert.

Die Sensor-Zellen können beispielsweise als Fotozellen ausgebildet sein, welche in einem zweidimensionalen Feld angeordnet werden  und Licht empfangen, das von der gegen eine
Platte gedrückten Oberfläche eines Fingers reflektiert wird.
Derartige Einrichtungen zur Erfassung von Fingerabdrücken
sind beispielsweise aus den US-Patentschriften 435 8677 und
434 0300 bekannt.

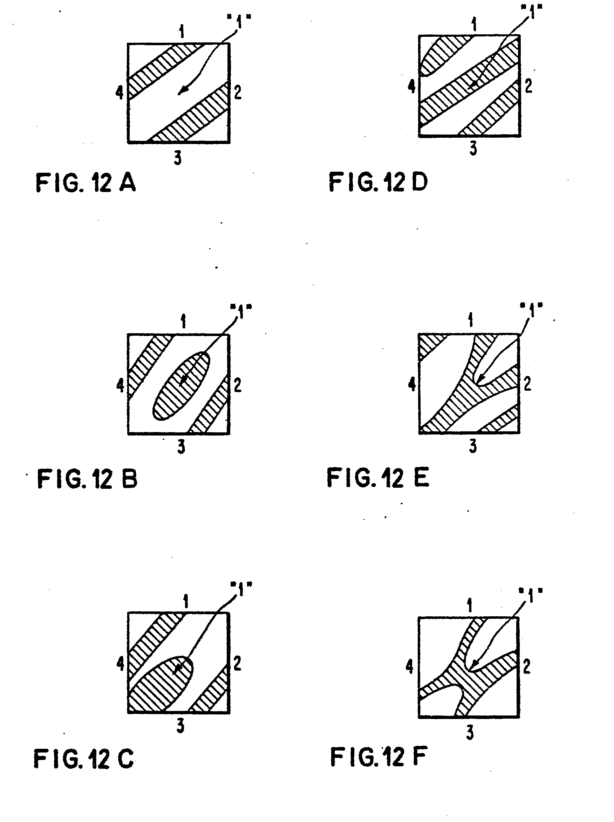

Wie noch an späterer Stelle im Zusammenhang mit der Figur 11
ausgeführt werden soll, ist die Zusammenhangs-Matrix für die
Erfassung von Fingerabdrücken nützlich, bei welcher für
weitere Untersuchungen interessante Merkmale und Details
eines Fingerabdruckes rasch identifiziert werden. Diese Vorauswahl von Merkmalen vermeidet eine aufwendige Vorverarbeitung von unwichtigen Informationen eines Fingerabdruckes
durch einen Rechner und führt somit zu einer Einsparung an
Rechnerzeit und einer Beschleunigung beim Identifizieren des
Fingerabdruckes. So kann im Hinblick auf die in hohem Maße
parallel arbeitende Kombination aus Sensor-Anordnung und Zusammenhangs-Matrix die erfindungsgemäße Zusammenhangs-Ermittlung tatsächlich in Echtzeit ausgeführt werden.

Zahlreiche andere Sensor-Anordnungen können für die Steuerung der Schalter-Zellen der Zusammenhangs-Matrix eingesetzt
werden, um eine Zusammenhangs-Information in Echtzeit herzuleiten. Beispiele derartiger Sensor-Anordnungen sind Röntgenstrahl-Detektor-Anordnungen, Infrarot-Detektor-Anordnungen,
Mikrowellen-Detektor-Anordnungen, Ultraschall-Detektor-Anordnungen, Geofon-Detektor-Anordnungen, Druck-Detektor-Anordnungen, Temperatur-Detektor-Anordnungen und Spannungs-
Detektor-Anordnungen. Bei den meisten dieser Anordnungen muß
das von jedem einzelnen Sensor als Reaktion auf Licht, Röntgenstrahlen, Infrarotlicht usw. erzeugte Signal verstärkt und
dann durch einen Schwellwert-Detektor, wie z.B. einen
Schmitt-Trigger geleitet werden, welcher festlegt, ob das
Signal oberhalb oder unterhalb eines für die Erkennung maßgeblichen Schwellwertes liegt. Die von den Sensoren erzeugten Signale werden auf diese Weise digitalisiert und die resultierenden Digitalsignale werden dann zur Steuerung der
Schalter-Zellen herangezogen.

Es ist darauf hinzuweisen, daß die von der Sensor-Anordnung
abgeleiteten Digitalsignale auch in einem Speicher als
binäre Informationen aufbewahrt werden können. Die Schalter-
Zellen der Zusammenhangs-Matrix können somit auch durch
diese im Speicher aufbewahrten binären Informationen indirekt
gesteuert werden.

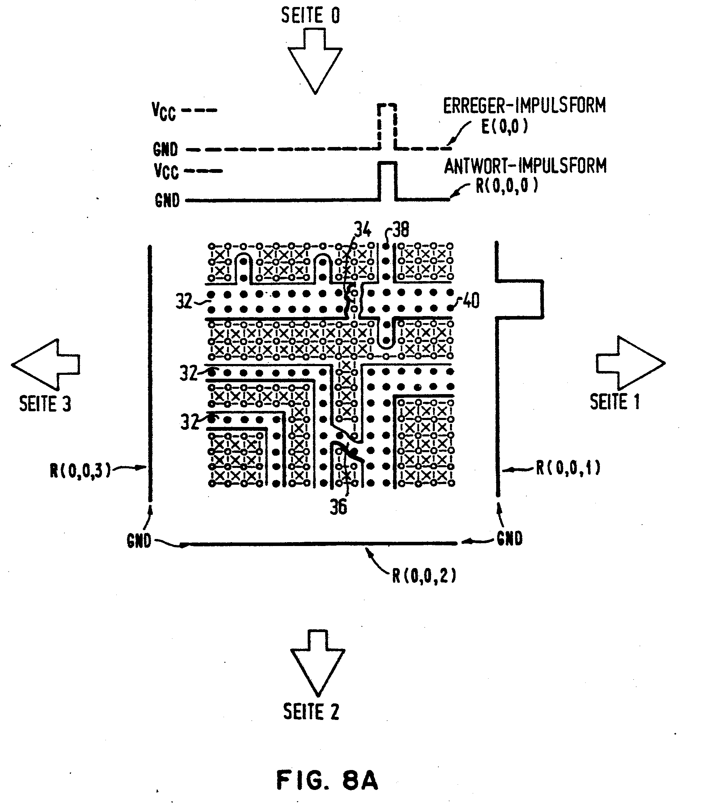

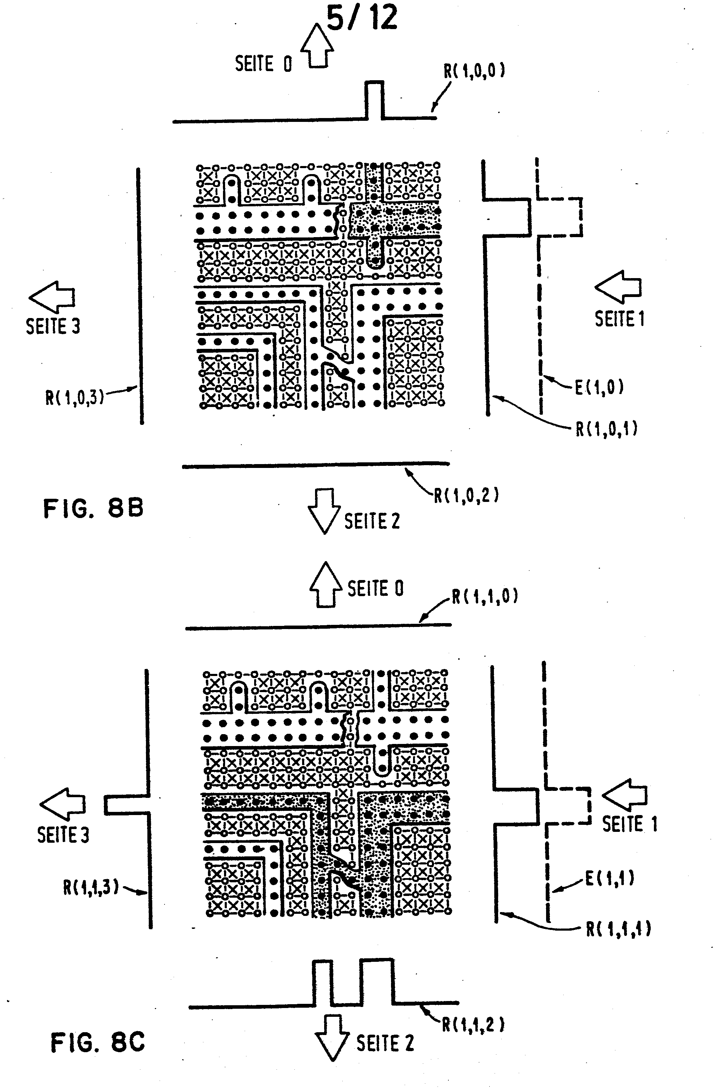

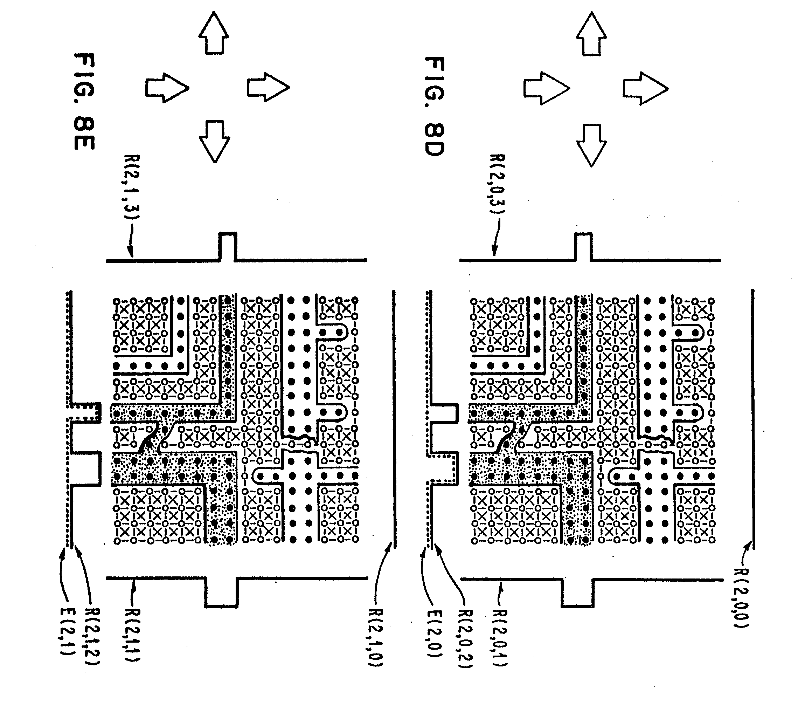

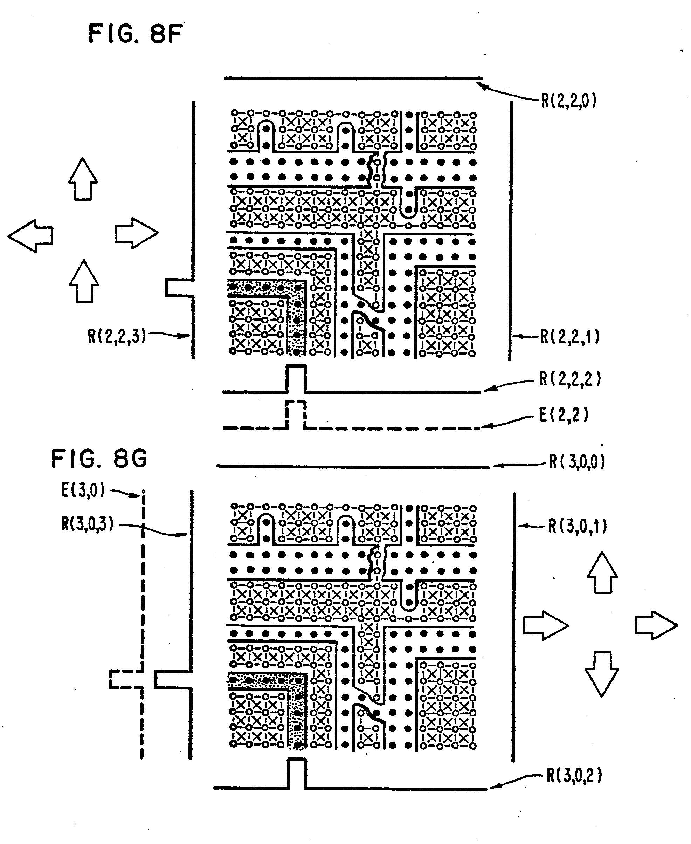

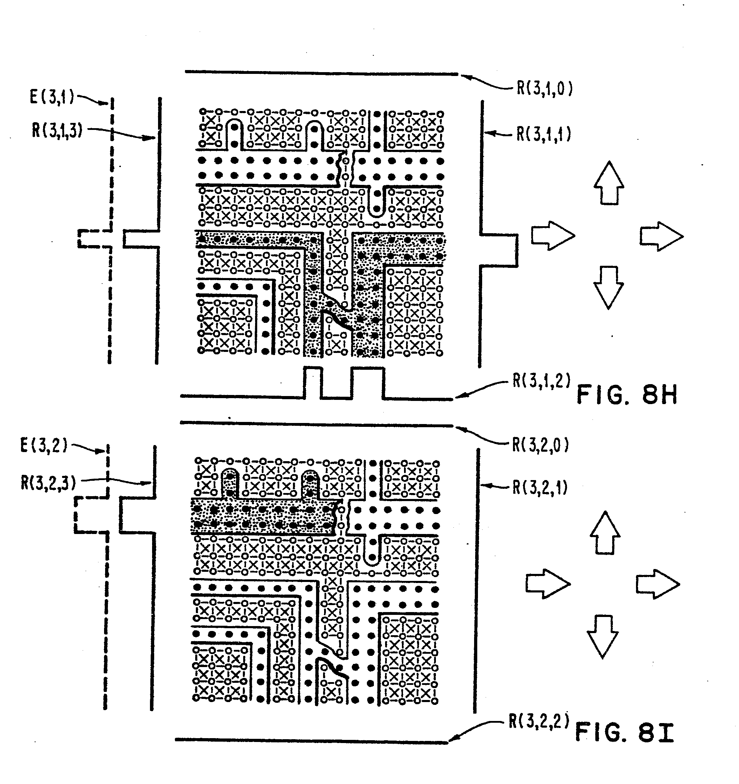

Die Figuren 8 bis 10 verdeutlichen die Arbeitsweise einer
erfindungsgemäßen Einrichtung, bei der auf die Leiterbahnen
einer gedruckten Schaltung angewandten Zusammenhangs-Ermittlung.Die Figuren 8A bis 8I zeigen dabei einen kleinen
Bereich bzw. ein Fenster einer mit leitfähigem Material 32
bedruckten Schaltungsplatte. In dem dargestellten Beispiel
weisen die Leiterbahnen zwei Unregelmäßigkeiten bzw. Fehler
auf. Dies sind eine Leiterbahnunterbrechung 34 und eine
Brücke 36. Der Sinn und Zweck der Zusammenhangs-Ermittlung
besteht dabei in der Identifizierung und Lokalisierung derartiger Fehler.

Der Arbeitsweise entsprechend wird das Fenster der Schaltungsplatte an jedem Punkt auf jeder Seite, an dem die Leiterbahnen sich bis zum äußeren Umfang erstrecken, erregt. Dementsprechend wird gemäß Figur 8A eine Erreger-Impulsform E
am Punkt 38 der Seite 0 appliziert und die durch die Erregung hervorgerufene Antwort-Impulsform R an allen Seiten
der Schaltungsplatte beobachtet. Wie aus Figur 8A ersichtlich ist, erzeugt die am Punkt 38 applizierte Erregung eine
Antwort auf der Seite 0 nur an diesem Punkt. Auf der Seite 1
zeigt eine Antwort-Impulsform R eine Leiterbahn am Punkt 40
des äußeren Umfangs an. Demgegenüber erzeugt die Erregung
auf den Seiten 2 und 3 keine Antwort-Impulsformen, da die
Leiterbahnen, die den äußeren Umfang an diesen Seiten erreichen, mit dem Punkt 38 nicht elektrisch leitend verbunden
sind. Bei der Erreger-Impulsform E und der Antwort-Impulsform R ist jeweils mit GND die Masse bzw. das Nullpotential
und mit $V_{CC}$ die Klemmenspannung bezeichnet.

Die Antwort-Impulsform R, die durch die aufeinanderfolgende
Erregung jeder der bis zum äußeren Umfang reichenden Leiterbahnen erzeugt werden, sind in den Figuren 8B bis 8I dargetellt. Zum leichteren Verständnis sind dabei jeweils diejenigen Bereiche der Leiterbahnen, die das Erreger-Signal
weiterleiten durch eine feine Punktierung dunkel hervorgehoben. Außerdem sind in den Figuren 8A bis 8I jeweils hinter
den Erreger-Impulsformen E und den Antwort-Impulsformen R
Klammerausdrücke angegeben, die allgemein als E (I, K) und
R (I,K, L) angegeben werden können. Dabei ist mit I diejenige
Seite I = 0, I = 1, I = 2 oder I = 3 bezeichnet, auf der die
Erreger-Impulsform E appliziert wird. Mit K ist die Stellenzahl zusammenhängender Gruppen von logisch 1-Zuständen am
äußeren Umfang des Fensters auf der Seite I bezeichnet.
Praktisch ist damit mit K = 0, K = 1 und K = 2 die nullte, erste oder zweite Stelle bzw. Leiterbahn bezeichnet, an der
auf der Seite I die Erreger-Impulsform E appliziert wird.
Mit L ist schließlich diejenige Seite L = 0, L = 1, L = 2
oder L = 3 bezeichnet, an der die jeweilige Antwort-Impulsform R auftritt. Aus den Figuren 8B bis 8I geht deutlich
hervor, daß durch die jeweilige Zuordnung von Erreger-Impulsform E (I, K) und Antwort-Impulsform R (I, K, L) die
durch die Punktierung dunkel hervorgehobenen Bereiche als
zusammenhängende Leiterbahnbereiche erscheinen. Fehlt dann
ein derartig zusammenhängender Leiterbahnbereich oder tritt
ein zusammenhängender Leiterbahnbereich unerwartet auf, so
kann auf eine Leiterbahnunterbrechung 34 bzw. eine Brücke 36
geschlossen werden.

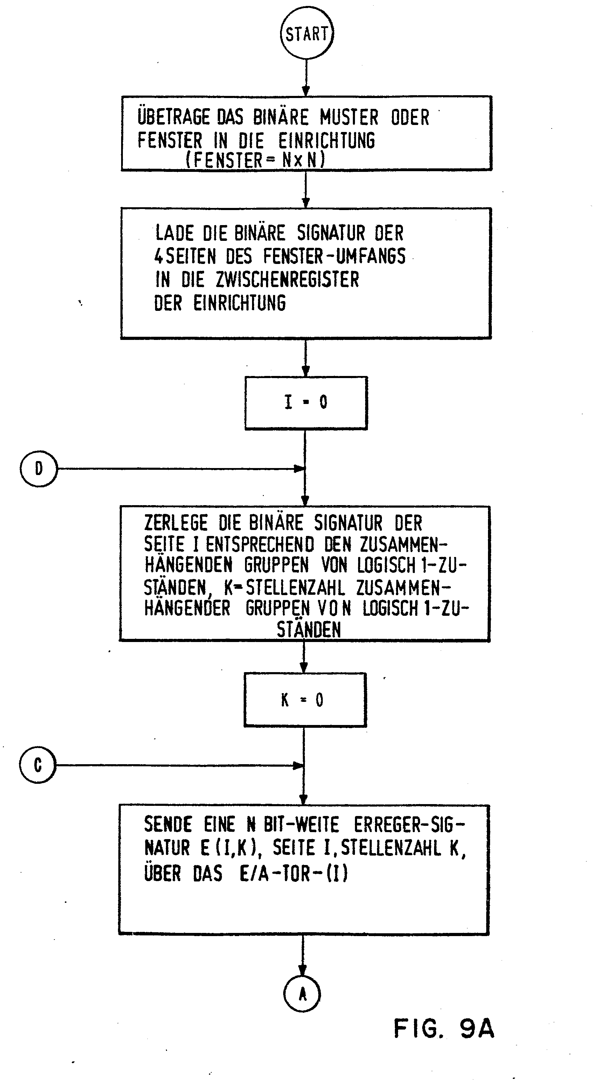

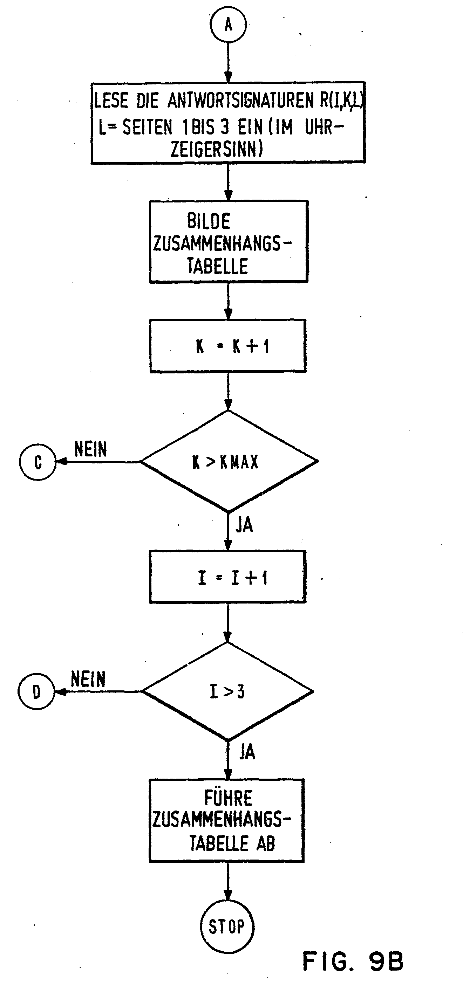

Die Figuren 9A und 9B zeigen ein Flußdiagramm, aus welchem
die Vorgangsweise der Zusammenhangs-Ermittlung entsprechend
den Figuren 8A bis 8I in einer für den Fachmann ohne
weiteres erkennbaren Weise hervorgeht. Die Verknüpfung der
Figuren 9A und 9B ist dabei durch die Buchstaben A, C und D
aufgezeigt. Der Zweck dieser Vorgangsweise besteht zunächst
darin, folgende Zusammenhangs-Tabelle zu bilden:

| Seite # | Versatz | Verbindung 1=Verbindung 0=Unterbrechung | Seite # | Versatz |
|---|---|---|---|---|
| 0 | 12 | 1 | 1 | 4,5 |
|  | 9,10 | 1 | 2 | 5,6,9 |
| 1 | 9,10 | 1 | 3 | 8 |
| 2 | 12 | 1 | 3 | 5 |
| 3 | 12,13 | 0 | - | - |

-12-

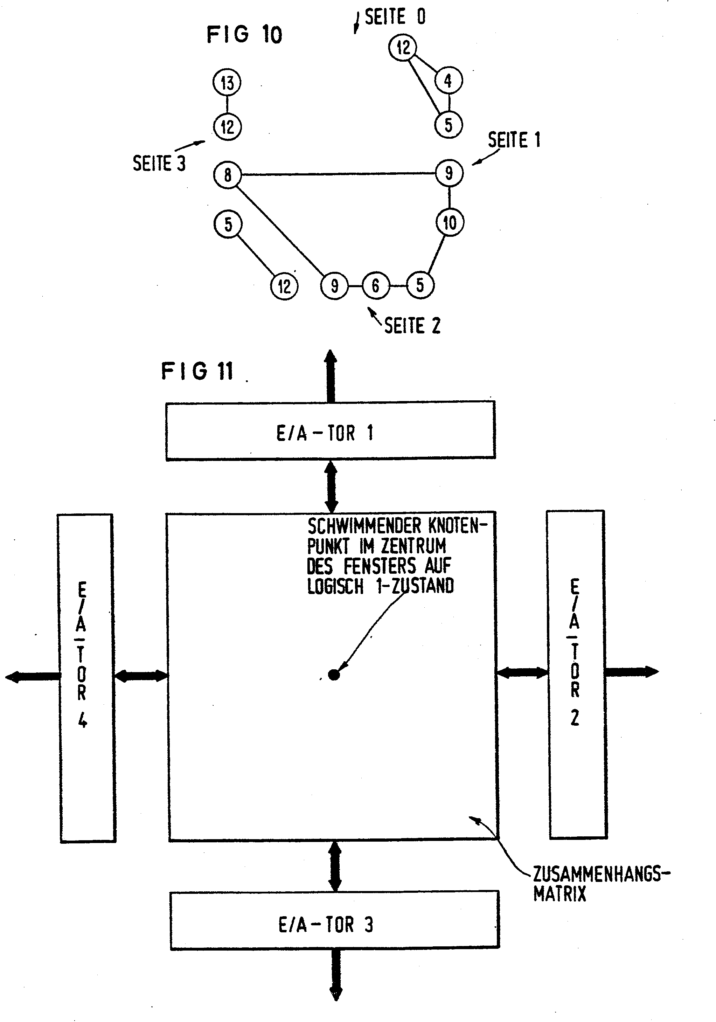

Der Versatz gibt dabei die Lage der Knotenpunkte am äußeren Umfang des 16x16-Fensters an. Diese Lage wird als im Uhrzeigersinn erfaßte Ziffer zwischen 1 und 16 angegeben, wobei auf jeder Seite 0, 1, 2 und 3 jeweils mit der Ziffer 1 begonnen wird. So wird beispielsweise der Versatz des in Figur 8A dargestellten Punktes 38 auf der Seite 0 mit der Ziffer 12 bezeichnet. Dementsprechend ist beispielsweise der ersten Zeile der vorstehend aufgeführten Zusammenhangs-Tabelle zu entnehmen, daß der Punkt mit dem Versatz 12 auf der Seite 0 mit zwei Punkten mit dem Versatz 4 und 5 auf der Seite 1 zusammenhängend, d.h. elektrisch leitend verbunden ist. Diese Aussage deckt sich mit dem durch die Punktierung dunkel hervorgehobenen Bereich in Figur 8B. Aus der Zusammenhangs-Tabelle ergibt sich dann das in Figur 10 dargestellte Zusammenhangs-Schaubild, in welchem Verbindungen zwischen Punkten am äußeren Umfang des Fensters durch ausgezogene Linien dargestellt sind. Die Zusammenhangs-Tabelle und/oder das Zusammenhangs-Schaubild kann dann mit einem Modell der Schaltungsplatte verglichen werden, um diejenigen Fehler, wie Leiterbahnunterbrechungen oder Lotbrücken, zu erfassen, die in dem jeweils betrachteten Ausschnitt bzw. Fenster auftreten. So gibt beispielsweise die in Figur 10 fehlende Verbindung zwischen dem Punkt 12 der Seite 1 und den Punkten 12 und 13 der Seite 3 einen Aufschluß über die in Figur 8A dargestellte Leiterbahnunterbrechung 34.

Die erfindungsgemäße Zusammenhangs-Ermittlung ermöglicht einen schnellen optischen Test von Schaltungsplatten. Der optische Test hat mehrere sichere Vorteile gegenüber den herkömmlichen Kontakt-Testmethoden. Der entscheidende Vorteil besteht jedoch darin, daß keine mechanischen Kontakte benötigt werden. Diese Tatsache ist insofern wichtig, als die Schaltungsplatten immer kompakter werden und Kontakt-Testmethoden zu Ungenauigkeiten führen und in Abhängigkeit

-13-

von der Größe des Prüflings und den Andruckkräften sogar zu Beschädigungen führen können.

Die Ermittlung von Fehlern ist auch in Mehrlagenschaltungen möglich, wenn Röntgenabbildungen verwendet werden und die Sensoren durch geeignete Röntgenstrahl-Detektoren, wie z.B. Szintillationszähler mit Natriumjodidkristallen ersetzt werden.

Ein weiteres Anwendungsgebiet der erfindungsgemäßen Einrichtung zur Zusammenhangs-Ermittlung ist die Analyse von Fingerabdrücken. Bei der Analyse von Fingerabdrücken ist es wünschenswert festzustellen, ob das Zentrum des betrachteten Fensters mit irgendwelchen Punkten am äußeren Umfang verbunden ist. Wenn eine Verbindung besteht, so ist es ferner wünschenswert festzustellen, welche Punkte miteinander verbunden sind. Diese spezielle Anwendung der Einrichtung zur Zusammenhangs-Ermittlung wird im folgenden anhand der Figuren 11 und 12 beschrieben.

Figur 11 zeigt eine Zusammenhangs-Matrix, die durch eine Sensor-Anordnung gesteuert wird, deren optische Sensor-Zellen einen kleinen Fensterausschnitt eines Fingerabdrucks optisch erfassen. Ein Signal, das einem logisch 1-Zustand entweder als Impuls oder als einschlägiges Spannungs-Niveau darstellt, wird dem schwimmenden Knotenpunkt derjenigen Schalter-Zelle zugeführt, die im Zentrum der Zusammenhangs-Matrix liegt. Die Antwort-Signale am äußeren Umfang des Fensters werden dann über die Ein-/Ausgabe-Tore untersucht, um die vier Signal-Signaturen der vier Seiten zu bestimmen.

Die Figuren 12A bis 12F zeigen sechs verschiedene Bereiche eines Fingerabdrucks, welche durch die Einrichtung zur Zusammenhangs-Ermittlung erfaßt werden können. Im Fall der Figur 12A wird die Applikation eines logisch 1-Zustandes an der Schalter-Zelle im Zentrum der Zusammenhangs-Matrix keine
Signale an den vier Seiten hervorrufen, da diese Schalter-
Zelle mit keiner der sie umgebenden Schalter-Zellen verbunden sein wird. In ähnlicher Weise wird bei dem in Figur 12B
dargestellten Muster eines Fingerabdrucks der an die zentrale Schalter-Zelle applizierte logisch 1-Zustand sich nicht
bis zum äußeren Umfang fortpflanzen, da die zentrale Schalter-Zelle und die sie umgebenden und mit ihr verbundenen
Schalter-Zellen einen Inselbereich bilden, der mit keiner
Schalter-Zelle am äußeren Umfang verbunden ist. Bei dem in
Figur 12C dargestellten Muster wird die zentrale Schalter-
Zelle jedoch mit Schalter-Zellen verbunden, die an den
Seiten 3 und 4 den äußeren Umfang erreichen. Die folgende
Tabelle erläutert für jedes der in Figur 12 dargestellten
Fingerabdrucks-Muster die binären Muster derjenigen Signale,
die an den vier Seiten der Zusammenhangs-Matrix erscheinen:


T A B E L L E

| Figur | Seite | Signatur |
|-------|-------|----------|
| 12A | 1 | 0....0 |
| 12A | 2 | 0....0 |
| 12A | 3 | 0....0 |
| 12A | 4 | 0....0 |
| | | |
| 12B | 1 | 0....0 |
| 12B | 2 | 0....0 |
| 12B | 3 | 0....0 |
| 12B | 4 | 0....0 |

0121686

| Figur | Seite | Signatur |
|-------|-------|----------|
| 12C | 1 | 0....0 |
| 12C | 2 | 0....0 |
| 12C | 3 | 0...01...1 |
| 12C | 4 | 1...10...0 |
| | | |
| 12D | 1 | 0....0 |
| 12D | 2 | 0...01...10...0 |
| 12D | 3 | 0....0 |
| 12C | 4 | 0...01...10...0 |
| | | |
| 12E | 1 | 0...01...10...0 |
| 12E | 2 | 0...01...10...0 |
| 12E | 3 | 0...01...1 |
| 12E | 4 | 10...0 |
| | | |
| 12F | 1 | 0...01...10...0 |
| 12F | 2 | 0...01...10...0 |
| 12F | 3 | 0...01...10...0 |
| 12F | 4 | 0...01...10...0 |

Man kann erkennen, daß die in der Tabelle dargestellten
Signal-Signaturen die Anwesenheit bestimmter Merkmale des
Fingerabdrucks anzeigen. So zeigen die der Figur 12C zugeordneten Signaturen, daß eine Papillarlinie in dem betrachteten Fenster endet, während die den Figuren 12E und 12F zugeordneten Signaturen anzeigen, daß die Papillarlinien eine
Y-Konfiguration bzw. eine X-Konfiguration bilden. Dabei sind
insbesondere die beiden zuletzt genannten Merkmalstypen für
die Analyse von Fingerabdrücken nützlich.

17 Patentansprüche
12 Figuren

0121686

-16-

<u>Patentansprüche</u>

1. Einrichtung zur Ermittlung des zweidimensionalen Zusammenhangs einer vorgeschriebenen binären Variablen zwischen voneinander entfernten Punkten auf einer der binären Variablen zugeordneten Fläche, g e k e n n z e i c h n e t durch

a) eine zweidimensionale Anordnung von Knotenpunkten (14) eines Netzwerks;

b) eine Vielzahl von Schaltern (16), von welchen jeder derart zwischen zwei benachbarte Knotenpunkte (14) eingeschaltet ist, daß in der Einschaltstellung der Weg für ein Signal zwischen den benachbarten Knotenpunkten (14) hergestellt und in der Ausschaltstellung der Weg für ein Signal zwischen den benachbarten Knotenpunkten (14) unterbrochen ist;

c) eine zweidimensionale Anordnung von Sensoren, wobei durch jeden dieser Sensoren der binäre Zustand der Variablen an einem zugeordneten Punkt auf der Fläche erfaßbar ist; und

d) Steuerglieder, welche an die Sensoren angeschlossen sind und die individuellen Schaltstellungen der Schalter (16) in Abhängigkeit der von den zugeordneten Sensoren erfaßten individuellen Zustände der Variablen steuern, wobei jeder Sensor einem diesbezüglichen Knotenpunkt (14) der betreffenden Anordnung zugeordnet ist und zwei benachbarte Knotenpunkte (14) durch die Schalter (16) immer dann miteinander verbunden sind, wenn ein vorgegebener Zustand der Variablen durch diejenigen Sensoren erfaßt ist, die den beiden benachbarten Knotenpunkten (14) zugeordnet sind.

2. Einrichtung nach Anspruch 1, dadurch g e k e n n - z e i c h n e t , daß jedem Knotenpunkt (14) eine Vielzahl von Schaltern (16) zugeordnet ist, wobei jeder dieser Schalter (16) einen Knotenpunkt (14) mit einem seiner benachbarten Knotenpunkte (14) verbindet und wobei alle einem gegebenen Knotenpunkt (14) zugeordnete Schalter (16) gemeinsam in die Ausschaltstellung bzw. Einschaltstellung steuerbar sind in Abhängigkeit von dem binären Zustand der Variablen, der durch den dem gegebenen Knotenpunkt (14) zugeordneten Sensor erfaßbar ist.

3. Einrichtung nach Anspruch 2, dadurch g e k e n n - z e i c h n e t , daß jeder Knotenpunkt (14) mit allen seinen benachbarten Knotenpunkten (14) durch die Schalter (16) verbunden ist.

4. Einrichtung nach Anspruch 1, g e k e n n z e i c h n e t durch eine Vielzahl von Ein-/Ausgabe-Toren, welche mit individuellen Knotenpunkten (14) am äußeren Umfang der Anordnung von Knotenpunkten (14) verbunden sind, um Signale zu diesen individuellen Knotenpunkten (14) zu übertragen und Signale dieser individuellen Knotenpunkte (14) zu empfangen.

5. Einrichtung nach Anspruch 4, dadurch g e k e n n - z e i c h n e t , daß jeder Knotenpunkt (14) am äußeren Umfang der Anordnung von Knotenpunkten (14) an wenigstens ein Ein-/Ausgabe-Tor angeschlossen ist.

6. Einrichtung nach Anspruch 4, dadurch g e k e n n - z e i c h n e t , daß zwischen jeden Knotenpunkt (14) und sein zugeordnetes Ein-/Ausgabe-Tor einer der Schalter (16) eingeschaltet ist.

7. Einrichtung nach Anspruch 4, dadurch g e k e n n - z e i c h n e t , daß rund um den äußeren Umfang der Anordnung von Knotenpunkten (14) herum mehrere Gruppen von Ein-/Ausgabe-Toren angeordnet sind, wobei jede Gruppe eine
Anzahl von Ein-/Ausgabe-Toren aufweist, die mit einer entsprechenden Anzahl von benachbarten Knotenpunkten (14) verbunden sind.

8. Verwendung einer Einrichtung nach Anspruch 1 zur Ermittlung der Anwesenheit oder Abwesenheit einer Papillarlinie
auf der Oberfläche eines menschlichen Fingers.

9. Verwendung einer Einrichtung nach Anspruch 1 zur Ermittlung der Anwesenheit oder Abwesenheit einer Leiterbahn auf
der Oberfläche einer gedruckten Schaltung.

10. Einrichtung nach Anspruch 1, dadurch    g e k e n n -
z e i c h n e t    , daß die Sensoren als gegen Strahlung
empfindliche Sensoren ausgebildet sind und daß durch jeden
Sensor die Anwesenheit oder Abwesenheit einer von dem zugeordneten Punkt auf der Oberfläche ausgehenden Strahlung
erfaßbar ist.

11. Einrichtung nach Anspruch 10, dadurch    g e k e n n -
z e i c h n e t    , daß als Strahlung eine Lichtstrahlung
vorgesehen ist.

12. Einrichtung nach Anspruch 1, dadurch    g e k e n n -
z e i c h n e t    , daß die Anordnung von Knotenpunkten (14)
und die Anordnung von Sensoren als rechtwinklige MxN-Anordnungen ausgebildet sind.

13. Einrichtung nach Anspruch 1, dadurch    g e k e n n -
z e i c h n e t    , daß die Anordnung von Knotenpunkten
(14) und die Anordnung von Sensoren als dreieckige Anordnungen ausgebildet sind.

14. Einrichtung nach Anspruch 1, dadurch    g e k e n n -

-19-

zeichnet , daß die Anordnung von Knotenpunkten
(14) und die Anordnung von Sensoren als sechseckige Anordnungen ausgebildet sind.


15. Einrichtung nach Anspruch 1, gekennzeichnet durch erste Schaltungsmittel zum Anlegen einer
Spannung an wenigstens einen Knotenpunkt (14) und durch
zweite Schaltungsmittel zum Erfassen des Vorhandenseins
dieser Spannung an wenigstens einem anderen Knotenpunkt
(14).


16. Einrichtung nach Anspruch 15, dadurch gekennzeichnet , daß durch die ersten Schaltungsmittel
eine Spannung an eine Vielzahl von ersten Knotenpunkten (14)
am äußeren Umfang der Anordnung von Knotenpunkten (14) anlegbar ist und daß durch die zweiten Schaltungsmittel das
Vorhandensein dieser Spannung an einer Vielzahl von zweiten
Knotenpunkten (14) am äußeren Umfang der Anordnung von Knotenpunkten (14) erfaßbar ist, um dadurch den schaltungsmäßigen Zusammenhang zwischen Knotenpunkten (14) der Anordnung zu bestimmen.


17. Einrichtung nach Anspruch 15, dadurch gekennzeichnet , daß durch die ersten Schaltungsmittel
eine Spannung an einen schwimmenden Knotenpunkt (14) im
Inneren der Anordnung von Knotenpunkten (14) anlegbar ist
und daß durch die zweiten Schaltungsmittel das Vorhandensein
dieser Spannung an einer Vielzahl von zweiten Knotenpunkten
(14) am äußeren Umfang der Anordnung von Knotenpunkten (14)
erfaßbar ist, um dadurch den schaltungsmäßigen Zusammenhang
zwischen Knotenpunkten (14) der Anordnung zu bestimmen.

0121686

E/A - TOR 0

E/A - TOR 3

E/A - TOR 1

E/A - TOR 2

FIG. 1

FIG. 2

FIG. 3

STEUERUNG

0121686

FIG. 4

FIG. 5

22        20        22

20

22

20

22

20

20        22

**FIG. 6**

2-D SENSOR-ANORDNUNG

SENSOR-ZELLE

STEUERUNG

ZUSAMMENHANGS-MATRIX

SCHALTER-ZELLE

**FIG. 7**

SEITE 0

$V_{CC}$ ---

GND ---

ERREGER-IMPULSFORM
E(0,0)

$V_{CC}$ ---

GND ---

ANTWORT-IMPULSFORM
R(0,0,0)

SEITE 3

SEITE 1

R(0,0,3)

R(0,0,1)

GND

GND

R(0,0,2)

SEITE 2

FIG. 8A

0121686

5/ 12

SEITE 0    R(1,0,0)

SEITE 3

R(1,0,3)

SEITE 1

E(1,0)

R(1,0,1)

**FIG. 8B**

R(1,0,2)

SEITE 2

SEITE 0    R(1,1,0)

SEITE 3

R(1,1,3)

SEITE 1

E(1,1)

R(1,1,1)

**FIG. 8C**    R(1,1,2)

SEITE 2

FIG. 8D

R(2,0,0)

R(2,0,3)

R(2,0,1)

R(2,0,2)

E(2,0)

FIG. 8E

R(2,1,0)

R(2,1,3)

R(2,1,1)

R(2,1,2)

E(2,1)

FIG. 8F

R(2,2,0)

R(2,2,3)

R(2,2,1)

R(2,2,2)

E(2,2)

FIG. 8G

R(3,0,0)

E(3,0)

R(3,0,3)

R(3,0,1)

R(3,0,2)

E(3,1)
R(3,1,3)
R(3,1,0)
R(3,1,1)
R(3,1,2)

FIG. 8H

E(3,2)
R(3,2,3)
R(3,2,0)
R(3,2,1)
R(3,2,2)

FIG. 8I

0121686

START

ÜBETRAGE DAS BINÄRE MUSTER ODER
FENSTER IN DIE EINRICHTUNG
(FENSTER = N x N)

LADE DIE BINÄRE SIGNATUR DER
4 SEITEN DES FENSTER-UMFANGS
IN DIE ZWISCHENREGISTER
DER EINRICHTUNG

$I - 0$

D

ZERLEGE DIE BINÄRE SIGNATUR DER
SEITE I ENTSPRECHEND DEN ZUSAMMEN-
HÄNGENDEN GRUPPEN VON LOGISCH 1-ZU-
STÄNDEN, K = STELLENZAHL ZUSAMMEN-
HÄNGENDER GRUPPE VON LOGISCH 1-ZU-
STÄNDEN

$K = 0$

C

SENDE EINE N BIT-WEITE ERREGER-SIG-
NATUR E (I,K), SEITE I, STELLENZAHL K,
ÜBER DAS E/A-TOR-(I)

A

FIG. 9A

FIG. 9B

**FIG 10**

SEITE 0

SEITE 3

SEITE 1

SEITE 2

**FIG 11**

E/A-TOR 1

E/A-TOR 4

E/A-TOR 2

SCHWIMMENDER KNOTEN-
PUNKT IM ZENTRUM
DES FENSTERS AUF
LOGISCH 1-ZUSTAND

ZUSAMMENHANGS-
MATRIX

E/A-TOR 3

FIG. 12 A

FIG. 12 D

FIG. 12 B

FIG. 12 E

FIG. 12 C

FIG. 12 F